# EUROPEAN PATENT SPECIFICATION

(11) **EP 1 872 527 B1**
(45) Date of publication and mention of the grant of the patent: **29.05.2013**
(21) Application number: 06741392.2
(22) Date of filing: 18.04.2006
(51) Int. Cl.: H04L 29/08

(54) **SYSTEM AND METHOD FOR ENABLING GROUP SUBSCRIPTION FOR ASYNCHRONOUS PUSH-BASED APPLICATIONS ON A WIRELESS DEVICE**
SYSTEM UND VERFAHREN ZUM ERMÖGLICHEN EINES GRUPPENABONNEMENTS FÜR ASYNCHRONE ANWENDUNGEN AUF PUSH-BASIS AUF EINER DRAHTLOSEN VORRICHTUNG
SYSTEME ET PROCEDE PERMETTANT UN ABONNEMENT DE GROUPE POUR DES APPLICATIONS ASYNCHRONES FONDEES SUR LA TECHNOLOGIE DE DISTRIBUTION SELECTIVE SUR UN DISPOSITIF SANS FIL

(30) Priority: 18.04.2005 US 672035 P
(43) Date of publication of application: 02.01.2008
(73) Proprietor: Research In Motion Limited, Waterloo, ON N2L 3W8 (CA)
(72) Inventor: FRITSCH, Brindusa, Toronto, Ontario M9C 2J9 (CA); BIBR, Viera, Kilbride, Ontario L0P 1G0 (CA); SHENFIELD, Michael, Richmond Hill, Ontario L4C 3S9 (CA)
(74) Representative: Patel, Binesh
(86) International application number: PCT/CA2006/000609
(87) International publication number: WO 2006/111015

(56) References cited:
- EP-A2- 1 126 681
- EP-A2- 1 345 456
- WO-A2-02/103967
- US-A- 6 154 766
- US-A1- 2003 050 986
- US-A1- 2004 068 481
- US-A1- 2004 181 604
- US-A1- 2005 021 622
- US-A1- 2005 063 335
- US-A1- 2006 023 674
- US-A1- 2006 036 941
- US-A1- 2006 039 401
- US-B1- 6 442 565
- WIRELESS APPLICATION PROTOCOL FORUM: "WAP Push Architectural Overview" INTERNET CITATION, [Online] 8 November 1999 (1999-11-08), XP002183436 Retrieved from the Internet: URL:http://www1.wapforum.org/tech/document s/WAP-165-PushArchOverview-1999 1108-a.pdf> [retrieved on 2001-11-20]
- ROACH A B ET AL: "A Session Initiation Protocol (SIP) Event Notification Extension for Resource Lists", NETWORK WORKING GROUP INTERNET DRAFT, XX, XX, 13 June 2003 (2003-06-13), pages 1-42, XP002334590,

## Description

The present patent disclosure relates generally to a communication system for providing communication with a plurality of wireless devices and specifically to a system and method for enabling group subscription for asynchronous push-based applications on such devices.

### BACKGROUND

Due to the proliferation of wireless networks, there are a continually increasing number of wireless devices in use today. These devices include mobile telephones, personal digital assistants (PDAs) with wireless communication capabilities, two-way pagers and the like. Concurrently with the increase of available wireless devices, software applications running on such devices have increased their utility. For example, the wireless device may include an application that retrieves a weather report for a list of desired cities or an application that allows a user to shop for groceries. These software applications take advantage of the ability to transmit data of the wireless network in order to provide timely and useful services to users, often in addition to voice communication. However, due to a plethora of different types of devices, restricted resources of some devices, and complexity of delivering large amounts of data to the devices, developing software applications remains a difficult and time-consuming task.

Currently, devices are configured to communicate with Web services through Intemet-based browsers and/or native applications. Browsers have the advantage of being adaptable to operate on a cross-platform basis for a variety of different devices, but have a disadvantage of requesting pages (screen definitions in HTML) from the Web service, which hinders the persistence of data contained in the screens. A further disadvantage of browsers is that the screens are rendered at runtime, which can be resource-intensive. Applications for browsers are efficient tools for designing platform independent applications. Accordingly, different runtime environments, regardless of the platform, execute the same application. However, since different wireless devices have different capabilities and form factors, the application may not be executed or displayed as desired. Further, browser-based application often require significant transfer bandwidth to operate efficiently, which may be costly or even unavailable for some wireless devices.

Current push applications available for mobile devices are proprietary implementations that have not been constructed using a standard specification for the subscription/notification model. Currently there is no known framework to build a mobile application generically, describe it as a 'notification enabled' application by pinpointing the notification components and put it in a context from which it can be available to the device for download and point and click execution.

United States patent application no. US2004/0181604A1 discloses a system, apparatus and method for enhancing the relevance of information that is provided to users of communication devices. Content notifications relating to various categories/subcategories are pushed to a communication device by way of a notification service. Content usage information is received from the communication device. A modification of the set of topics targeted for transmission to the communication device occurs, where the modification is based on the content usage information of the communication device. The content notifications related to the modified topics are then pushed to the communication device via the notification service.

ITEF Working Group draft "draft-ietf simple-event-lust-04" by Roach et al. describes an aggregation mechanism for generating subscription requests. The IETF draft "draft-ietf-simple-event-lust-04" tries to solve the problem that "the subscriber generate a SUBSCRIBE request for each resource about which they want information". Hence, the IETF draft "draft-ietf-simple-event-lust-04" describes a situation where one subscriber sends request to multiple resources. The technical approach used in the IETF draft "draft-ietf-simple-event-lust-04" is a list that "allows for requesting and conveying notifications for lists of resources. A resource list is identified by a URI and it represents a list of zero or more URIs. Each of these URIs is an identifier for an individual resource for which the subscriber wants to receive information.

### SUMMARY

Systems and methods disclosed herein provide a communication system for enabling group subscription for asynchronous push-based applications on wireless devices and notification broadcast to obviate or mitigate at least some of the aforementioned disadvantages

In accordance with an aspect of the present patent disclosure there is provided an application gateway server for providing a proxy for a group subscription , the application gateway server comprising: a subscription collection (606) for storing the group subscription from a plurality of wireless devices (102) to notification-based applications provided by a back-end server (108), the back-end server hosting an event source (520) and accepting a subscription (612) sent from the application gateway server (118), the subscription collection (606) including a plurality of filters describing a plurality of subscriptions from the plurality of wireless devices, each of the plurality of filters representing a unique filter expression; a subscriber collection (610) for identifying each of the plurality of wireless devices (102) and applications of the each of the plurality of wireless devices (102), the applications being subscribed to the event source accepting the group subscription; and means for sending a subscribe message to the event source as a proxy subscription on behalf of the plurality of wireless devices; wherein a new filter is added to the subscription collection (606) when there is no previous subscription message with same filter content and destination stored in the subscription collection (606); wherein the subscription collection (606) includes: a subscription Internal ID; a subscription External ID; a subscription name; a filter expression; and an event source endpoint; wherein a new subscriber is preserved to the subscriber collection when a new subscription has an identical filter and an identical event source; and wherein the subscriber collection (610) includes: subscription Internal ID; subscribed device; subscribed application; and subscription name..

In accordance with another aspect of the present patent disclosure there is provided a method of providing a group subscription, the method comprising: creating a subscription collection (606) for storing the group subscription from a plurality of wireless devices (102) to notification-based applications provided by a back-end server (108), the back-end server hosting an event source (520) and accepting a subscription (612) sent from an application gateway server (118), the subscription collection (606) including a plurality of filters describing a plurality of subscriptions from the plurality of wireless devices, each of the plurality of filters representing a unique filter expression; creating a subscriber collection (610) for identifying each of the plurality of wireless devices (102) and applications of the each of the plurality of wireless devices (102), the applications being subscribed to the event source accepting the group subscription; receiving a first subscription request having a filter content and a destination; determining if a subscription message having the filter content and the destination has been previously received; adding a new filter to the subscription collection (606) if the subscription message has not been previously received; and sending a subscribe message to the event source as a proxy subscription on behalf of the plurality of wireless devices; wherein the subscription collection (606) includes: a subscription Internal ID; a subscription External ID; a subscription name; a filter expression; and an event source endpoint; wherein a new subscriber is preserved to the subscriber collection when a new subscription has an identical filter and an identical event source; and wherein the subscriber collection (610) includes: subscription Internal ID; subscribed device; subscribed application; and subscription name..

In accordance with another aspect of the present patent disclosure there is provided a computer-readable medium storing instructions or statements for use in the execution in a computer of a method of providing a group subscription , the method comprising the steps of: creating a subscription collection (606) for storing the group subscription from a plurality of wireless devices (102) to notification-based applications provided by a back-end server (108), the back-end server hosting an event source (520) and accepting a subscription (612) sent from an application gateway server (118), the subscription collection (606) including a plurality of filters describing a plurality of subscriptions from the plurality of wireless devices, each of the plurality of filters representing a unique filter expression; creating a subscriber collection (610) for identifying each of the plurality of wireless devices (102) and applications of the each of the plurality of wireless devices (102), the applications being subscribed to the event source accepting the group subscription; receiving a first subscription request having a filter content and a destination; determining if a subscription message having the filter content and the destination has been previously received; adding a new filter to the subscription collection (606) if the subscription message has not been previously received; and sending a subscribe message to the event source as a proxy subscription on behalf of the plurality of wireless devices; wherein the subscription collection (606) includes: a subscription Internal ID; a subscription External ID; a subscription name; a filter expression; and an event source endpoint; wherein a new subscriber is preserved to the subscriber collection when a new subscription has an identical filter and an identical event source; and wherein the subscriber collection (610) includes: subscription Internal ID; subscribed device; subscribed application; and subscription name..

### BRIEF DESCRIPTION OF THE DRAWINGS

An embodiment of the patent disclosure will now be described by way of example only with reference to the following drawings in which:
- Figure 1: shows in a schematic diagram an example of a network facilitating wireless component applications;
- Figure 2: shows in a detailed component diagram an example of the application gateway shown in Figure 1;
- Figure 3: shows in a flow diagram an example of a wireless component application communication model;
- Figure 4: shows in an interface diagram an example of a communication sequence for the wireless component application communication model of Figure 3;
- Figure 5: shows in flow diagram an example of a network as shown in Figure 1 for enabling asynchronous push-based applications on wireless devices in accordance with an embodiment of the present patent disclosure;
- Figure 6: illustrates in a flow diagram an example of subscription in a network configured for group subscription to notification-based applications in accordance with an embodiment of the present patent disclosure;
- Figure 7: illustrates in a flow diagram an example of notification in a network configured for group subscription to notification-based applications in accordance with an embodiment of the present patent disclosure;
- Figure 8: illustrates in a flow diagram an example of un-subscription in a network configured for group subscription to notification-based applications in accordance with an embodiment of the present patent disclosure; and
- Figure 9: illustrates in a flow diagram an example of subscription ending in a network configured for group subscription to notification-based applications in accordance with an embodiment of the present patent disclosure.

### DETAILED DESCRIPTION OF THE PREFERRED EMBODIMENT

Systems and methods disclosed herein provide a communication system for enabling group subscription for asynchronous push-based applications on wireless devices and notification broadcast to obviate or mitigate at least some of the aforementioned disadvantages.

In the wireless device world, where resources are scarce and connectivity is intermittent, the user experience is best when information is 'pushed' to the user's device. The user does not experience network latency since the user is not actively requesting the information, but rather the information is pushed to him as soon as it is available. Applications that are suitable for push deliver dynamic data, information that is valuable in real-time (examples include email, messaging, weather, news, stock quotes, sports events, and schedules).

This patent disclosure describes a way to optimize traffic between device and event source for push-enabled applications. A proxy (in wireless component application terms this is the Application Gateway) sends a subscription to the event source on behalf of multiple devices (on some external event like administrator action). This subscription contains criteria that apply for multiple devices, thus reducing wireless traffic (saving each device from the need to subscribe individually with the same criteria). The proxy maintains the list of devices and applications that the subscription applies to. Traffic between event source and proxy is reduced as well, since the event source will only notify the proxy once and then the proxy will notify all subscribers for that subscription.

The method and system enables broadcast of notifications to multiple devices, while the devices are running same or different notification-based applications. This solution greatly optimizes the traffic between server proxy and event source by reducing the number of subscriptions and notifications initiated between the two parties.

Advantageously, the concept of a publish-subscribe mechanism is applied to reduce network traffic and associate through subscriptions disparate mobile applications without any apparent connections between them.

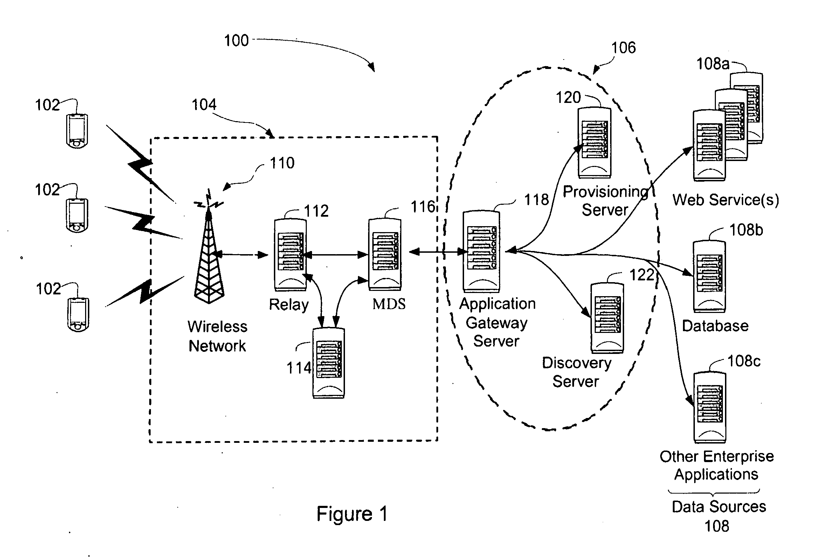

For convenience, like numerals in the description refer to like structures in the drawings. Referring to Figure 1, a communication infrastructure is illustrated generally by numeral 100. The communication infrastructure 100 comprises a plurality of wireless devices 102, a communication network 104, an application gateway 106, and a plurality of back-end services 108.

The wireless devices 102 are typically personal digital assistants (PDAs), such as a BlackBerry™ by Research in Motion for example, but may include other devices. Each of the wireless devices 102 includes a runtime environment capable of hosting a plurality of component applications.

Component applications comprise one or more data components, presentation components, and/or message components, which are written in a structured definition language such as Extensible Markup Language (XML). The component applications can further comprise workflow components which contain a series of instructions such as written in a subset of ECMAScript, and can be embedded in the XML in some implementations. Therefore, since the applications are compartmentalized, a common application can be written for multiple devices by providing corresponding presentation components without having to rewrite the other components. Further, large portions of the responsibility of typical applications are transferred to the runtime environment for component application. The details of the component applications are described at the end of this description.

The wireless devices 102 are in communication with the application gateway 106 via the communication network 104. Accordingly, the communication network 104 may include several components such as a wireless network 110, a relay 112, a corporate server 114 and/or a mobile data server (MDS) 116 for relaying data between the wireless devices 102 and the application gateway 106.

The application gateway 106 comprises a gateway server 118 a provisioning server 120 and a discovery server 122. The gateway server 118 acts as a message broker between the runtime environment on the wireless devices 102 and the back-end servers 108. The gateway server 118 is in communication with both the provisioning server 120 and the discovery server 122. The gateway server 118 is further in communication with a plurality of the back-end servers 108, such as Web services 108a, database services 108b, as well as other enterprise services 108c, via a suitable link. For example, the gateway server 118 is connected with the Web services 108a and database services 108b via Simple Object Access Protocol (SOAP) and Java Database Connectivity (JDBC) respectively. Other types of back- end servers 108 and their corresponding links will be apparent to a person of ordinary skill in the art.

Each wireless device 102 is initially provisioned with a service book establishing various protocols and settings, including connectivity information for the corporate server 114 and/or the mobile data server 116. These parameters may include a Uniform Resource Locator (URL) for the application gateway server 118 as well as its encryption key. Alternatively, if the wireless device 102 is not initially provisioned with the URL and encryption key, they may be pushed to the wireless device 102 via the mobile data server 116. The mobile device 102 can then connect with the application gateway 106 via the URL of the application gateway server 118.

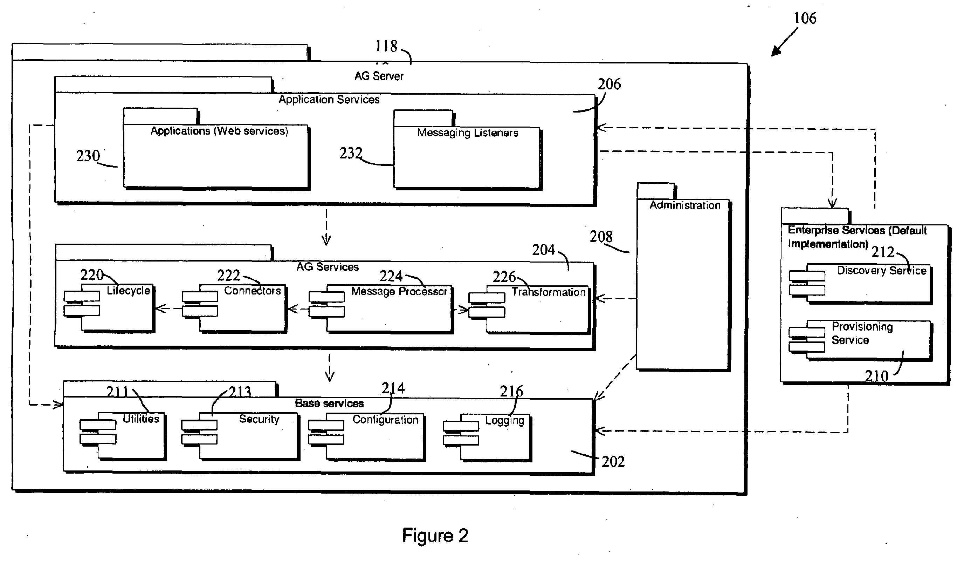

Referring to Figure 2, a more detailed view of the application gateway 106 is shown. The application gateway server 118 includes three layers of service; a base services layer 202, an application gateway services layer 204 and an application services layer 206. The application gateway server 118 further includes an administration service 208.

The provisioning server 120 and discovery server 122 provide a provisioning service 210 and a discovery service 212, respectively.

At the lowest level, the base services layer 202 offers basic, domain-independent system services to other components in higher levels. Thus, for example, all subsystems in the application gateway services layer 204 and the application services layer 206 can utilize and collaborate with the subsystems in the base services layer 202. In the present embodiment, the base services layer 202 includes a utilities subsystem 210, a security subsystem 212, a configuration subsystem 214, and a logging subsystem 216.
The application gateway services layer 204 provides wireless component application domain-specific services. These services provide efficient message transformation and delivery to back-end services 108 and provide wireless device 102 and component application lifecycle management. In the present embodiment, the application gateway services layer 204 includes a lifecycle subsystem 220, a connector subsystem 222, a messaging subsystem 224, and a transformation subsystem 226.

The application services layer 206 sits at the top of the architecture and provides external program interfaces and user interfaces using subsystems provided by the lower layers. For example, various applications such as a lifecycle application, a packaging application and a message listening application provide external program interfaces since they communicate primarily with applications on external systems. Similarly, an administration application provides a user interface by providing a user with the ability to access and potentially modify application gateway data and/or parameters.

The administration service 208 is responsible for administrative system messages, administration of the wireless devices 102, runtime administration of the application gateway subsystems, support and display system diagnostics, and administration of default implementations of the provisioning and discovery services.

The messaging listening application provides an interface for receiving messages from the wireless devices 102 as well as external sources and forwarding them to the messaging subsystem. Further, the message listening application typically authenticates that the source of the message is valid.

The security subsystem 212 providing services used by other subsystems for securing communications with the wireless device 102. In order to facilitate secure communications, the security subsystem 212 encrypts and decrypts messages, validates signatures and signs messages.

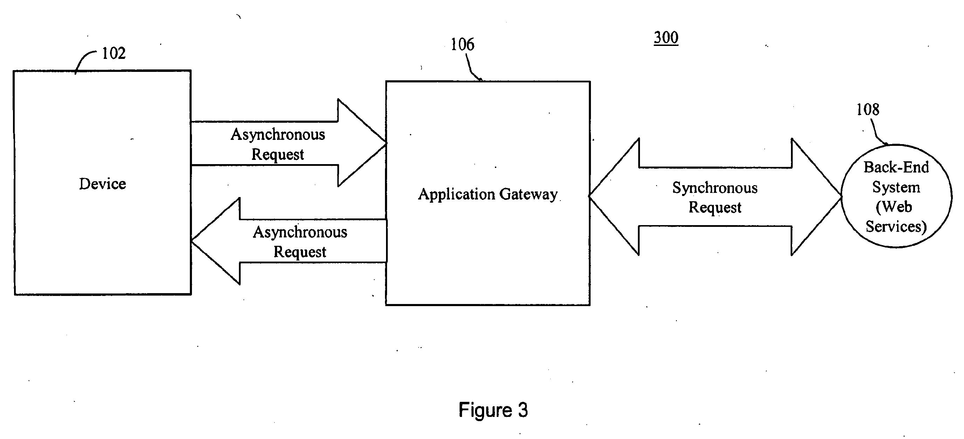

Referring to Figure 3 there is illustrated in a flow diagram an example of a wireless component application communication model. From a high-level perspective, the overall wireless component application infrastructure 300 includes a wireless component application runtime environment (Device RE) running on the device 102 and a wireless component application gateway (AG) 106 running on the server 118.

The AG 106 serves as a mediator between a wireless component application (sometimes referred to as application in this disclosure) executed by the RE and one or more back-end services 108 with which the application communicates. Often the back-end service is expected to be a Web service 108a using SOAP over HTTP or HTTPS as the transport protocol. As Web services are the most commonly expected back-end service 108, the term Web service is used interchangeable with back-end service 108 throughout this disclosure. However, it is appreciated that other types of back-end services can also be adapted to the disclosure. Figure 3 exemplifies a synchronous link with a back-end service 108. However, it should be appreciated that the AG 106 can be in communication with back-end services 108 over asynchronous links.

The wireless component application communication model 300 is based upon an asynchronous messaging paradigm. In this model the application gateway (AG) 106 establishes and mediates the connection between the device 102 and the back-end service(s) 108 to:
1. Achieve greater flexibility in resource management.
2. Provide reliable communication link between device 102 and back-end service 108 to handle situations when wireless coverage is unstable.
3. Efficiently distribute workload between device RE 102 and AG 106.

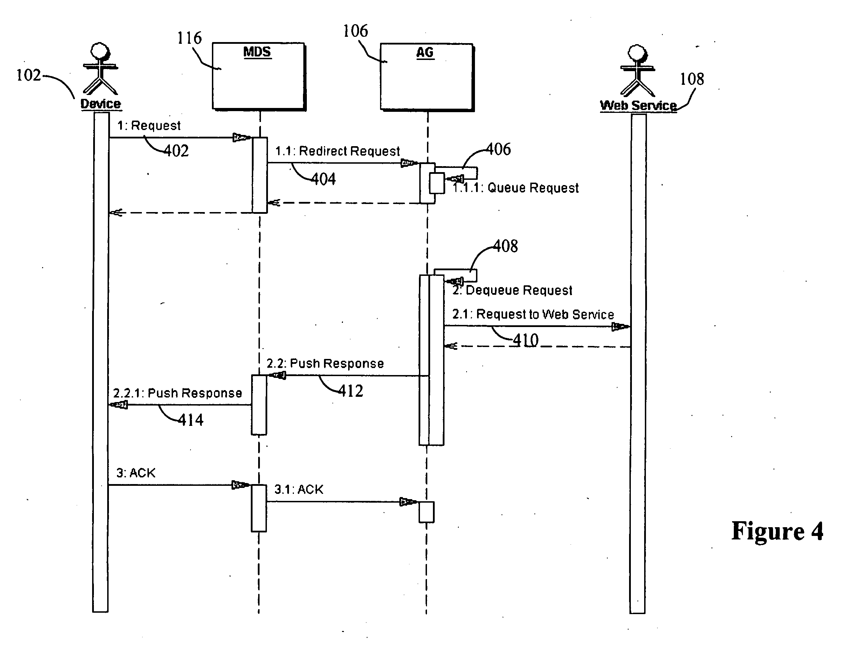

Referring to Figure 4 there is illustrated in an interface diagram an example of a communication sequence for the wireless component application communication model of Figure 3. The diagram describes the communications sequence between the device 102 and the back-end service(s) 108:
● Upon receiving a request 402 from the device 102, via redirect request 404 the mobile data server (MDS) 116, AG 106 queues the request 406 and releases the connection to the device.
● Next, the request is retrieved from the queue 408, pre-processed and forwarded 410 to the Web service 108 through a synchronous communication channel.
● Any response from the previous request is processed by the application gateway (AG) 106 and a response message is sent asynchronously 412 and 414 back to the device.

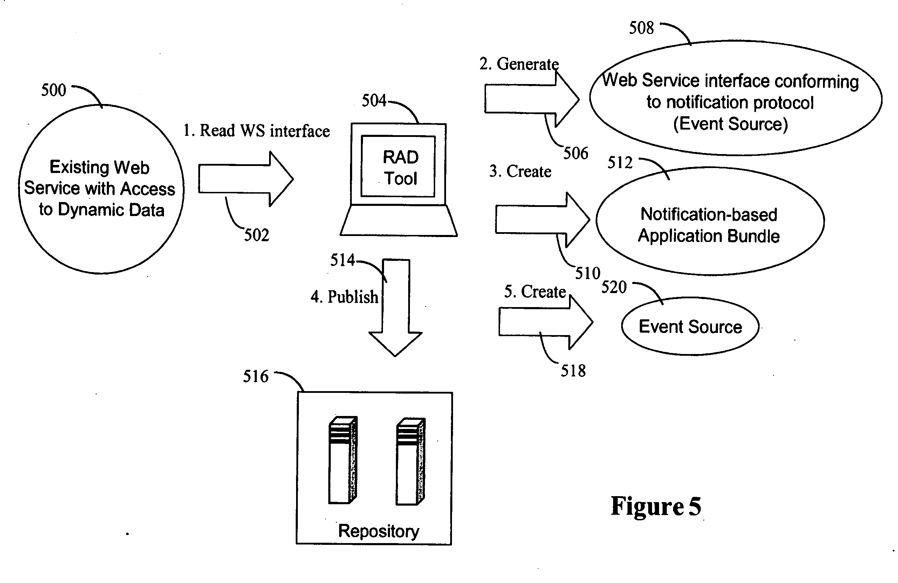

Referring to Figure 5 there is illustrated in a flow diagram an example of a network as shown in Figure 1 for enabling asynchronous push-based applications on wireless devices in accordance with an embodiment of the present patent disclosure. In Figure 5, at Step 1, an existing Web service 500 has its Web service interface read 502 by a user of a (rapid application development) RAD tool 504. Then, at Step 2, the RAD tool user 504 generates 506 a Web service interface 508 conforming to a notification protocol. At Step 3, the RAD tool user 504 creates 510 a notification-based application bundle 512, then at Step 4 publishes 514 the notification-based application bundle 512 to a repository 516 associated with the application gateway 106. At the same time the RAD tool user 504 publishes a registry entry in a registry, the registry entry refers to the application bundle and where it is located. At Step 5 the RAD tool user 504 creates 518 an event source 520. If the mobile application developer (RAD user) has update rights to the back-end server that has the data and is to act as the event source 520, the event source is implemented according to the protocol supported by the application gateway 106. Otherwise, a proxy is created on the application gateway 106 to implement the required subscription/notification protocol. In this implementation of event source 520, the back-end infrastructure is polled for data and to detect data changes and triggers notifications when changes are found.

The following definitions are used with the detailed description:

| | |
|---|---|
| *Notification* | message carrying data of interest to a specific user |
| *Subscription* | message denoting an event originated by a user that expresses his interest to be notified when specific events occur |
| *Server Proxy* | server enabling a mobile application to communicate with back-end application servers and have access to data |
| *Notification-based Application Bundle* | XML application built with RAD tools that has been built for a framework that supports a notification protocol (for example, WS-Eventing). The application is accompanied by additional information to help the mobile framework map the application messages to notification protocol components. |
| *WS-Eventing* | Web Services Eventing standard for notification-based Web services (ftp://www6.software.ibm.com/software/developer/library/ws-eventing/WS-Eventing.pdf) |
| *Event Source* | Back-end server accepting subscriptions, delivering notifications based on them and terminating subscriptions |
| *Event Sink* | Server accepting notifications from event source |
| *Filter* | Expression that describes the type of data the user is interested in; it may have any format as long as the event sink and the event source both understand it |

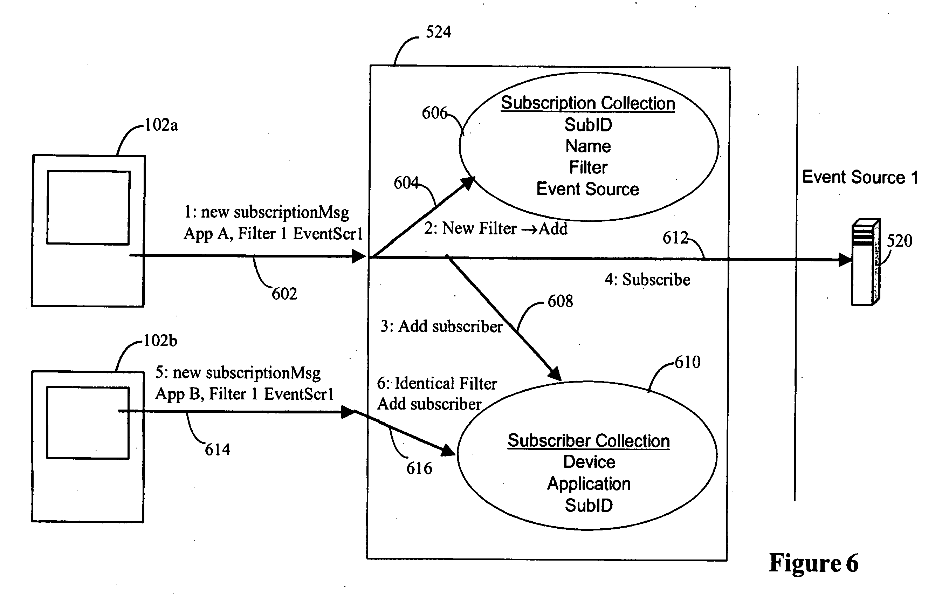

Referring to Figure 6 there is illustrated in a flow diagram an example of subscription in a network configured for group subscription to notification-based applications in accordance with an embodiment of the present patent disclosure. Two mobile devices 102a and 102b communicate separately with a server proxy 524 to subscribe to services provided by the event source 520. At Step 1 the mobile device 102a sends a new subscription message 602 to the server proxy 524.

The server proxy 524 determines whether a subscription message with the same filter content and destination (event source endpoint) has been previously received and stored in the subscription collection. If a subscription matching this criteria is not found as shown at Step 2, a new filter is added 604 to a subscription collection 606 and at Step 3 a subscriber is added 608 to a subscriber collection 610. At Step 4, a subscribe message is sent 612 to the event source 520. If the subscription matching the criteria is found (yes) as shown at Steps 5 and 6 only information for a new subscriber 102b is preserved at 614 and 616 in the subscriber collection.

Subscribe Use Case: Device1 (102a) sends 602 the subscription SA with Filter 1. At the server proxy 524, Filter1 is assembled in accordance with the filter expression used by the event source 520 (or protocol) to form for example, "P1"+"P2"+"P3". This subscription is sent to event source 1 (520). At some other time, Device2 (102b) sends 614 another subscription for another application B that has the same Filter1 and is intended for the same event source 520. Since these two subscriptions have identical parameters, bandwidth savings can be realized by only sending the subscription once 612 to the event source 520. In other words, if any identical subscriptions occur, the proxy only preserves 616 the identity of the subscriber (in this case device and application).

The following are examples of two devices subscribing to two different applications that have common filter parameter values:

| | | | |
|---|---|---|---|
| Device1 | | | |
| Application A | | | |
| | Subscription SA | | |
| | | Filter1 | |
| | | | P1 |
| | | | P2 |
| | | | P3 |
| | | | |
| Device2 | | | |
| Application B | | | |
| | Subscription SB | | |
| | | Filter1 | |
| | | | P1 |
| | | | P2 |
| | | | P3 |

The following other scenarios can occur where the same subscription is applied:
(Filter1, E1), D1, App A -- Subscription sent from Device D1 (102a), application A, with Filter1 for event source E1 (520)
(Filter1, E1), D2, App A
(Filter1, E1), D1, App B
(Filter1, E1), D3, App B

The server proxy 524 maintains a subscription collection 606 including the following:
● Subscription Internal ID - The Subscription internal ID is generated by the proxy server 524 and sent to the event source 520; it is used by the event source 520 for notifications and subscription end.
● Subscription External ID (or Cancellation ID) - The Subscription external ID is sent by the event source 520 in subscription response; it is used by the proxy server 524 to send an unsubscribe message to the event source 520 (i.e., to cancel the subscription).
● Subscription Name is unique across an application or within a subscription type. The Subscription name is sent by the device 102.
● Filter expression is sent by device 102; expression is assembled by the server proxy 524.,
● Event Source Endpoint - the server proxy 524 loads connectivity information for the event source endpoint when an application is installed on device 102.

The server proxy 524 maintains a subscriber collection 610 with a reference to the subscription ID including the following:
● Device
● Application
● Expiry (optional) - Expiry: date when subscription for this subscriber will expire; if expiry is specified, the proxy has to consider it and delete subscribers after this time is elapsed
● Subscription Internal ID is reference to subscription collection
● Subscription name is the unique identifier on the device; it is used for notification, unsubscribe, subscription end.

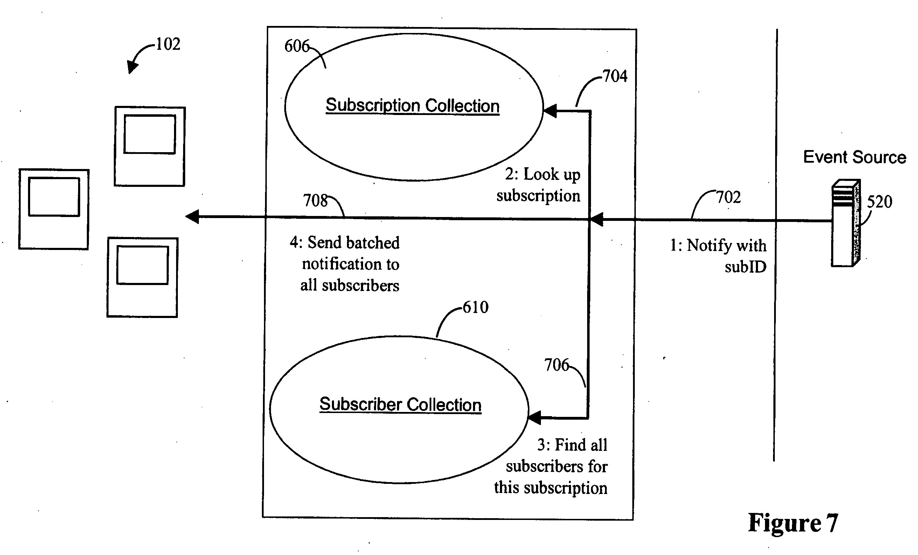

Referring to Figure 7 there is illustrated in a flow diagram an example of notification in a network configured for group subscription and notification broadcast to notification-based applications in accordance with an embodiment of the present patent disclosure.

When notification 702 for the subscription arrives at Step 1, the server proxy 524 looks up 704 the subscription at Step 2 and finds 706 all the subscribers for the 'service' at Step 3 and broadcasts 708 the message to all of them 102 at Step 4. The subscriber is represented by a (device, application) pair. The server proxy 524 builds and sends this message to different mobile applications hosted by the runtime environment on the mobile device.

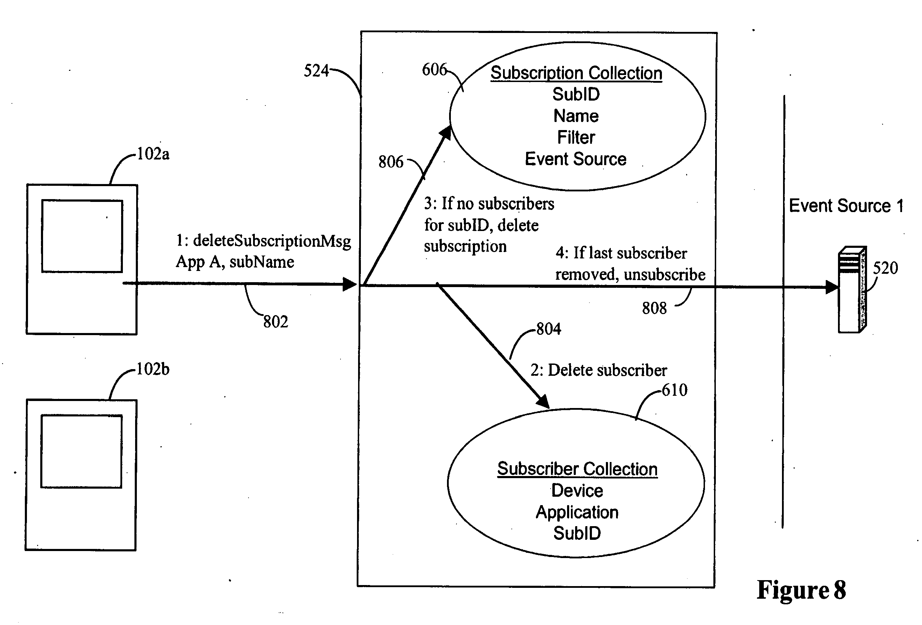

Referring to Figure 8 there is illustrated in a flow diagram and example of un-subscription in a network configured for group subscription to notification-based applications in accordance with an embodiment of the present patent disclosure. An unsubscribe 802 is initiated by the subscriber 102a, at Step 1. The proxy server removes 804 the subscriber from the subscriber collection 610, at Step 2. Only if there are no longer any instances in the subscriber collection, the subscription identified by the subscription internal ID is removed 806 from the subscription collection 606, at Step 3 and an unsubscribe message is sent 808 to the event source 520, at Step 4.

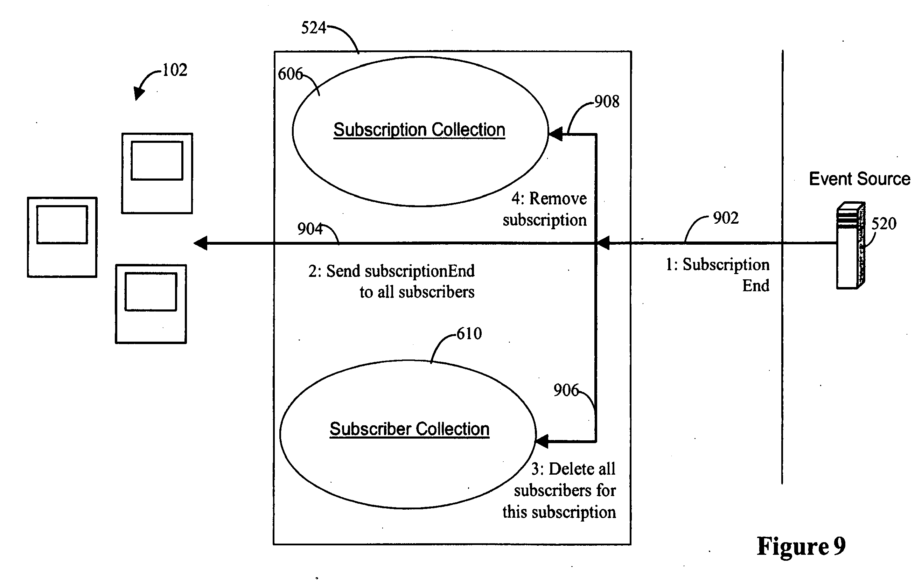

Referring to Figure 9 there is illustrated in a flow diagram an example of subscription ending in a network configured for group subscription to notification-based applications in accordance with an embodiment of the present patent disclosure. The event source 520 initiates Subscription End 902, at Step 1. When received, the proxy server 524 sends 904 a subscription End message to all subscribers 102 for this subscription ID, at Step 2. Note that the server proxy 524 builds and sends this message to different applications hosted by the same runtime environment. The proxy server 524 empties 906 the subscriber collection 610, at Step 3 and removes 908 the subscription with this ID from the subscription collection 606, at Step 4. The subscriber instance is represented by a (device, application) pair.

The system and methods according to the present patent disclosure may be implemented by any hardware, software or a combination of hardware and software having the above described functions. The software code, either in its entirety or a part thereof, may be stored in a computer-readable memory. Further, a computer data signal representing the software code which may be embedded in a carrier wave may be transmitted via a communication network. Such a computer-readable memory and a computer data signal are also within the scope of the present patent disclosure, as well as the hardware, software and the combination thereof.

While particular embodiments of the present patent disclosure have been shown and described, changes and modifications may be made to such embodiments without departing from the true scope of the patent disclosure.

## Claims

1. An application gateway server (118) for providing a proxy (524) for a group subscription, the application gateway server (118) comprising:
a subscription collection (606) for storing the group subscription from a plurality of wireless devices (102) to notification-based applications provided by a back-end server (108), the back-end server hosting an event source (520) and accepting a subscription (612) sent from the application gateway server (118), the subscription collection (606) including a plurality of filters describing a plurality of subscriptions from the plurality of wireless devices, each of the plurality of filters representing a unique filter expression;
a subscriber collection (610) for identifying each of the plurality of wireless devices (102) and applications of the each of the plurality of wireless devices (102), the applications being subscribed to the event source accepting the group subscription; and
means for sending a subscribe message to the event source as a proxy subscription on behalf of the plurality of wireless devices;
wherein a new filter is added to the subscription collection (606) when there is no previous subscription message with same filter content and destination stored in the subscription collection (606);
wherein the subscription collection (606) includes: a subscription Internal ID; a subscription External ID; a subscription name; a filter expression; and an event source endpoint;
wherein a new subscriber is preserved to the subscriber collection when a new subscription has an identical filter and an identical event source; and
wherein the subscriber collection (610) includes: subscription Internal ID; subscribed device; subscribed application; and subscription name.

2. The application gateway server (118) as claimed in claim 1, wherein the application gateway server (118) is part of a system (100) comprising an application registry for hosting a wireless application identifier; and an application repository (516) for hosting a wireless application.

3. The application gateway server (118) as claimed in claim 1, wherein the subscriber collection includes:
subscription Internal ID;
subscribed device, subscribed application pairs; and
subscription name.

4. The application gateway server (118) as claimed in claim 1, wherein subscriptions are removed from the subscription collection (606) when there are no subscribers in the subscriber collection (610) associated with a particular subscription.

5. The application gateway server (118) as claimed in claim 2, wherein the application registry includes an entry for a component application in the application repository (516).

6. The application gateway server (118) as claimed in claim 2, wherein the application repository (516) includes a component application for accessing the back-end service (108) via the event source (520).

7. The application gateway server (118) as claimed in claim 2, wherein the system (100) enables notification message broadcast to multiple subscribers providing data content.

8. A method of providing a group subscription, the method comprising:
creating a subscription collection (606) for storing the group subscription from a plurality of wireless devices (102) to notification-based applications provided by a back-end server (108), the back-end server hosting an event source (520) and accepting a subscription (612) sent from an application gateway server (118), the subscription collection (606) including a plurality of filters describing a plurality of subscriptions from the plurality of wireless devices, each of the plurality of filters representing a unique filter expression;
creating a subscriber collection (610) for identifying each of the plurality of wireless devices (102) and applications of the each of the plurality of wireless devices (102), the applications being subscribed to the event source accepting the group subscription;
receiving a first subscription request having a filter content and a destination; determining if a subscription message having the filter content and the destination has been previously received;
adding a new filter to the subscription collection (606) if the subscription message has not been previously received; and
sending a subscribe message to the event source as a proxy subscription on behalf of the plurality of wireless devices;
wherein the subscription collection (606) includes: a subscription Internal ID; a subscription External ID; a subscription name; a filter expression; and an event source endpoint;
wherein a new subscriber is preserved to the subscriber collection when a new subscription has an identical filter and an identical event source; and
wherein the subscriber collection (610) includes: subscription Internal ID; subscribed device; subscribed application; and subscription name.

9. The method as claimed in claim 8, wherein the subscription collection (606) and the subscriber collection (610) are on an application gateway server.

10. The method as claimed in claim 8, wherein the subscriber collection (610) contains a plurality of (device, application) pairs.

11. The method as claimed in claim 8, wherein the step of determining comprises the step of comparing the filter content and the destination with subscription message information in the subscription collection (606).

12. The method as claimed in claim 8, further comprising the steps of:
receiving a notification having a filter content and a subscription internal ID from the event source;
comparing the filter content and the subscription internal ID with subscriber information in the subscriber collection (610); and
sending the notification to subscribers that have the filter content and the subscription Internal ID.

13. The method as claimed in claim 8, wherein the method is executed in a system having:
an application registry;
an application repository (516); and
the application gateway server (118) comprising a proxy (524) for communicating with each of the plurality of wireless devices (102), and the back-end server (108) hosting the event source (520) providing notifications.

14. A computer-readable medium storing instructions or statements for use in the execution in a computer of a method of providing a group subscription, the method comprising the steps of:
creating a subscription collection (606) for storing the group subscription from a plurality of wireless devices (102) to notification-based applications provided by a back-end server (108), the back-end server hosting an event source (520) and accepting a subscription (612) sent from an application gateway server (118), the subscription collection (606) including a plurality of filters describing a plurality of subscriptions from the plurality of wireless devices, each of the plurality of filters representing a unique filter expression;
creating a subscriber collection (610) for identifying each of the plurality of wireless devices (102) and applications of the each of the plurality of wireless devices (102), the applications being subscribed to the event source accepting the group subscription;
receiving a first subscription request having a filter content and a destination; determining if a subscription message having the filter content and the destination has been previously received;
adding a new filter to the subscription collection (606) if the subscription message has not been previously received; and
sending a subscribe message to the event source as a proxy subscription on behalf of the plurality of wireless devices;
wherein the subscription collection (606) includes: a subscription Internal ID; a subscription External ID; a subscription name; a filter expression; and an event source endpoint;
wherein a new subscriber is preserved to the subscriber collection when a new subscription has an identical filter and an identical event source; and
wherein the subscriber collection (610) includes: subscription Internal ID; subscribed device; subscribed application; and subscription name.

## Patentansprüche

1. Ein Anwendungs-Gateway-Server (118) zum Vorsehen eines Proxys (524) für eine Gruppen-Subskription, wobei der Anwendungs-Gateway-Server (118) aufweist:
eine Subskription-Sammlung (606) zum Speichern der Gruppen-Subskription von einer Vielzahl von drahtlosen Vorrichtungen (102) für Benachrichtigungs-basierte Anwendungen, die von einem Backend-Server (108) vorgesehen sind, wobei der Backend-Server eine Ereignisquelle (520) hostet und eine Subskription (612) annimmt, die von dem Anwendungs-Gateway-Server (118) gesendet wird, wobei die Subskription-Sammlung (606) eine Vielzahl von Filtern umfasst, die eine Vielzahl von Subskriptionen von der Vielzahl von drahtlosen Vorrichtungen beschreibt, wobei jeder der Vielzahl von Filtern einen eindeutigen Filterausdruck repräsentiert;
eine Subskribent-Sammlung (610) zum Identifizieren jeder der Vielzahl von drahtlosen Vorrichtungen (102) und Anwendungen von jeder der Vielzahl von drahtlosen Vorrichtungen (102), wobei die Anwendungen an der Ereignisquelle subskribiert sind, die die Gruppen-Subskription annimmt; und
Mittel zum Senden einer Subskribieren-Nachricht an die Ereignisquelle als eine Proxy-Subskription im Namen der Vielzahl von drahtlosen Vorrichtungen;
wobei ein neuer Filter zu der Subskription-Sammlung (606) hinzugefügt wird, wenn es keine vorherige Subskription-Nachricht mit demselben Filterinhalt und Ziel in der Subskription-Sammlung (606) gespeichert gibt; wobei die Subskription-Sammlung (606) umfasst: eine interne Subskription-ID; eine externe Subskription-ID; einen Subskription-Name;
einen Filterausdruck; und einen Ereignisquelle-Endpunkt;
wobei ein neuer Subskribent der Subskribent-Sammlung vorenthalten wird, wenn eine neue Subskription einen identischen Filter und eine identische Ereignisquelle hat; und
wobei die Subskribent-Sammlung (610) umfasst: eine interne Subskription-ID; eine subskribierte Vorrichtung; eine subskribierte Anwendung und einen Subskription-Name.

2. Der Anwendungs-Gateway-Server (118) gemäß Anspruch 1, wobei der Anwendungs-Gateway-Server (118) ein Teil eines Systems (100) ist, das ein Anwendungs-Registry aufweist zum Hosten eines drahtlosen Anwendungs-Identifizierers; und ein Anwendungs-Repositorium (516) zum Hosten einer drahtlosen Anwendung.

3. Der Anwendungs-Gateway-Server (118) gemäß Anspruch 1, wobei die Subskribent-Sammlung umfasst:
interne Subskription-ID;
subskribierte Vorrichtung-, subskribierte Anwendung-Paare; und
Subskription-Name.

4. Der Anwendungs-Gateway-Server (118) gemäß Anspruch 1, wobei Subskriptionen aus der Subskription-Sammlung (606) entfernt werden, wenn es keine Subskribenten in der Subskribent-Sammlung (610) gibt, die mit einer bestimmten Subskription assoziiert sind.

5. Der Anwendungs-Gateway-Server (118) gemäß Anspruch 2, wobei die Anwendungs-Registry einen Eintrag für eine Komponente-Anwendung in dem Anwendungs-Repositorium (516) aufweist.

6. Der Anwendungs-Gateway-Server (118) gemäß Anspruch 2, wobei das Anwendungs-Repositorium (516) eine Komponente-Anwendung umfasst zum Zugreifen auf den Backend-Dienst (108) über die Ereignisquelle (520).

7. Der Anwendungs-Gateway-Server (118) gemäß Anspruch 2, wobei das System (100) ein Benachrichtigungs-Nachricht-Broadcast an mehrere Subskribenten mit Dateninhalt ermöglicht.

8. Ein Verfahren zum Vorsehen einer Gruppen-Subskription, wobei das Verfahren aufweist:
Erzeugen einer Subskription-Sammlung (606) zum Speichern der Gruppen-Subskription von einer Vielzahl von drahtlosen Vorrichtungen (102) für Benachrichtigungs-basierte Anwendungen, die von einem Backend-Server (108) vorgesehen sind, wobei der Backend-Server eine Ereignisquelle (520) hostet und eine Subskription (612) annimmt, die von einem Anwendungs-Gateway-Server (118) gesendet wird, wobei die Subskription-Sammlung (606) eine Vielzahl von Filtern umfasst, die eine Vielzahl von Subskriptionen von der Vielzahl von drahtlosen Vorrichtungen beschreibt, wobei jeder der Vielzahl von Filtern einen eindeutigen Filterausdruck repräsentiert;
Erzeugen einer Subskribent-Sammlung (610) zum Identifizieren jeder der Vielzahl von drahtlosen Vorrichtungen (102) und Anwendungen von jeder der Vielzahl von drahtlosen Vorrichtungen (102), wobei die Anwendungen an der Ereignisquelle subskribiert sind, die die Gruppen-Subskription annimmt;
Empfangen einer ersten Subskription-Anforderung mit einem Filterinhalt und einem Ziel;
Bestimmen, ob eine Subskription-Nachricht mit dem Filterinhalt und dem Ziel vorher empfangen wurde;
Hinzufügen eines neuen Filters zu der Subskription-Sammlung (606), wenn die Subskription-Nachricht nicht vorher empfangen wurde; und
Senden einer Subskribieren-Nachricht an die Ereignisquelle als eine Proxy-Subskription im Namen der Vielzahl von drahtlosen Vorrichtungen;
wobei die Subskription-Sammlung (606) umfasst: eine interne Subskription-ID; eine externe Subskription-ID; einen Subskription-Name;
einen Filterausdruck; und einen Ereignisquelle-Endpunkt;
wobei ein neuer Subskribent der Subskribent-Sammlung vorenthalten wird, wenn eine neue Subskription einen identischen Filter und eine identische Ereignisquelle hat; und
wobei die Subskribent-Sammlung (610) umfasst: eine interne Subskription-ID; eine subskribierte Vorrichtung; eine subskribierte Anwendung und einen Subskription-Name.

9. Das Verfahren gemäß Anspruch 8, wobei die Subskription-Sammlung (606) und die Subskribent-Sammlung (610) auf einem Anwendungs-Gateway-Server sind.

10. Das Verfahren gemäß Anspruch 8, wobei die Subskribent-Sammlung (610) eine Vielzahl von (Vorrichtung, Anwendung)-Paaren enthält.

11. Das Verfahren gemäß Anspruch 8, wobei der Schritt des Bestimmens aufweist den Schritt eines Vergleichens des Filterinhalts und des Ziels mit einer Subskription-Nachricht-Information in der Subskription-Sammlung (606).

12. Das Verfahren gemäß Anspruch 8, das weiter die Schritte aufweist:
Empfangen einer Benachrichtigung mit einem Zielinhalt und einer internen Subskription-ID von der Ereignisquelle;
Vergleichen des Zielinhalts und der internen Subskription-ID mit Subskribent-Information in der Subskribent-Sammlung (610); und
Senden der Benachrichtigung an Subskribenten, die den Filterinhalt und die interne Subskription-ID haben.

13. Das Verfahren gemäß Anspruch 8, wobei das Verfahren in einem System ausgeführt wird, das aufweist:
ein Anwendungs-Registry;
ein Anwendungs-Repositorium (516); und
der Anwendungs-Gateway-Server (118) einen Proxy (524) aufweist zum Kommunizieren mit jeder der Vielzahl von drahtlosen Vorrichtungen (102) und der Backend-Server (108) die Ereignisquelle (520) zum Vorsehen von Benachrichtigungen hostet.

14. Ein computerlesbares Medium, das Anweisungen oder Angaben speichert zur Verwendung bei der Ausführung eines Verfahrens zum Vorsehen einer Gruppen-Subskription in einem Computer, wobei das Verfahren die Schritte aufweist:
Erzeugen einer Subskription-Sammlung (606) zum Speichern der Gruppen-Subskription von einer Vielzahl von drahtlosen Vorrichtungen (102) für Benachrichtigungs-basierte Anwendungen, die von einem Backend-Server (108) vorgesehen sind, wobei der Backend-Server eine Ereignisquelle (520) hostet und eine Subskription (612) annimmt, die von einem Anwendungs-Gateway-Server (118) gesendet wird, wobei die Subskription-Sammlung (606) eine Vielzahl von Filtern umfasst, die eine Vielzahl von Subskriptionen von der Vielzahl von drahtlosen Vorrichtungen beschreibt, wobei jeder der Vielzahl von Filtern einen eindeutigen Filterausdruck repräsentiert;
Erzeugen einer Subskribent-Sammlung (610) zum Identifizieren jeder der Vielzahl von drahtlosen Vorrichtungen (102) und Anwendungen von jeder der Vielzahl von drahtlosen Vorrichtungen (102), wobei die Anwendungen an der Ereignisquelle subskribiert sind, die die Gruppen-Subskription annimmt;
Empfangen einer ersten Subskription-Anforderung mit einem Filterinhalt und einem Ziel;
Bestimmen, ob eine Subskription-Nachricht mit dem Filterinhalt und dem Ziel vorher empfangen wurde;
Hinzufügen eines neuen Filters zu der Subskription-Sammlung (606), wenn die Subskription-Nachricht nicht vorher empfangen wurde; und
Senden einer Subskribieren-Nachricht an die Ereignisquelle als eine Proxy-Subskription im Namen der Vielzahl von drahtlosen Vorrichtungen;
wobei die Subskription-Sammlung (606) umfasst: eine interne Subskription-ID; eine externe Subskription-ID; einen Subskription-Name;
einen Filterausdruck; und einen Ereignisquelle-Endpunkt;
wobei ein neuer Subskribent der Subskribent-Sammlung vorenthalten wird, wenn eine neue Subskription einen identischen Filter und eine identische Ereignisquelle hat; und
wobei die Subskribent-Sammlung (610) umfasst: eine interne Subskription-ID; eine subskribierte Vorrichtung; eine subskribierte Anwendung und einen Subskription-Name.

## Revendications

1. Serveur de passerelle d'application (118) destiné à fournir un mandataire (524) à un abonnement de groupe, le serveur de passerelle d'application (118) comprenant :
une collection d'abonnements (606) pour stocker l'abonnement de groupe d'une pluralité de dispositifs sans fil (102) pour des applications basées sur une notification fournies par un serveur dorsal (108), le serveur dorsal hébergeant une source d'événement (520) et acceptant un abonnement (612) envoyé depuis le serveur de passerelle d'application (118), la collection d'abonnements (606) comprenant une pluralité de filtres décrivant une pluralité d'abonnements de la pluralité de dispositifs sans fil, chacun de la pluralité de filtres représentant une expression de filtre unique ;
une collection d'abonnés (610) pour identifier chacun de la pluralité de dispositifs sans fil (102) et des applications dudit chacun de la pluralité de dispositifs sans fil (102), les applications étant abonnées à la source d'événement acceptant l'abonnement de groupe ; et
des moyens pour envoyer un message d'abonnement à la source d'événement comme un abonnement mandataire au nom de la pluralité de dispositifs sans fil ;
dans lequel un nouveau filtre est ajouté à la collection d'abonnements (606) lorsqu'il n'y a pas de message d'abonnement précédent avec le même contenu de filtre et la même destination, stocké dans la collection d'abonnements (606) ;
dans lequel la collection d'abonnements (606) comprend : un ID Interne d'abonnement ; un ID Externe d'abonnement ; un nom d'abonnement ; une expression de filtre ; et un point d'extrémité de source d'événement ;
dans lequel un nouvel abonné est conservé dans la collection d'abonnés lorsqu'un nouvel abonnement a un filtre identique et une source d'événement identique ; et
dans lequel la collection d'abonnés (610) comprend : un ID Interne d'abonnement ; un dispositif abonné ; une application abonnée ; et un nom d'abonnement.

2. Serveur de passerelle d'application (118) selon la revendication 1, dans lequel le serveur de passerelle d'application (118) fait partie d'un système (100) comprenant un registre d'applications pour héberger un identificateur d'application sans fil ; et un référentiel d'applications (516) pour héberger une application sans fil.

3. Serveur de passerelle d'application (118) selon la revendication 1, dans lequel la collection d'abonnés comprend :
un ID Interne d'abonnement ;
des paires dispositif abonné, application abonnée ; et
un nom d'abonnement.

4. Serveur de passerelle d'application (118) selon la revendication 1, dans lequel des abonnements sont retirés de la collection d'abonnements (606) lorsqu'il n'y a pas d'abonné dans la collection d'abonnés (610) associé à un abonnement particulier.

5. Serveur de passerelle d'application (118) selon la revendication 2, dans lequel le registre d'applications comprend une entrée pour une application de composant dans le référentiel d'applications (516).

6. Serveur de passerelle d'application (118) selon la revendication 2, dans lequel le référentiel d'applications (516) comprend une application de composant pour accéder au service dorsal (108) via la source d'événement (520).

7. Serveur de passerelle d'application (118) selon la revendication 2, dans lequel le système (100) permet la diffusion de message de notification à de multiples abonnés fournissant un contenu de données.

8. Procédé de fourniture d'un abonnement de groupe, le procédé comprenant :
la création d'une collection d'abonnements (606) pour stocker l'abonnement de groupe d'une pluralité de dispositifs sans fil (102) pour des applications basées sur une notification, fournies par un serveur dorsal (108), le serveur dorsal hébergeant une source d'événement (520) et acceptant un abonnement (612) envoyé depuis un serveur de passerelle d'application (118), la collection d'abonnements (606) comprenant une pluralité de filtres décrivant une pluralité d'abonnements de la pluralité de dispositifs sans fil, chacun de la pluralité de filtres représentant une expression de filtre unique ;
la création d'une collection d'abonnés (610) pour identifier chacun de la pluralité de dispositifs sans fil (102) et des applications de chacun de la pluralité de dispositifs sans fil (102), les applications étant abonnées à la source d'événement acceptant l'abonnement de groupe ;
la réception d'une première demande d'abonnement ayant un contenu de filtre et une destination ;
la détermination du fait qu'un message d'abonnement ayant le contenu de filtre et la destination a été reçu précédemment ou non ;
l'ajout d'un nouveau filtre à la collection d'abonnements (606) si le message d'abonnement n'a pas été reçu précédemment ; et
l'envoi d'un message d'abonnement à la source d'événement comme un abonnement mandataire au nom de la pluralité de dispositifs sans fil ;
dans lequel la collection d'abonnements (606) comprend : un ID Interne d'abonnement ; un ID Externe d'abonnement ; un nom d'abonnement ; une expression de filtre ; et un point d'extrémité de source d'événement ;
dans lequel un nouvel abonné est conservé dans la collection d'abonnés lorsqu'un nouvel abonnement a un filtre identique et une source d'événement identique ; et
dans lequel la collection d'abonnés (610) comprend : un ID Interne d'abonnement ; un dispositif abonné ; une application abonnée ; et un nom d'abonnement.

9. Procédé selon la revendication 8, dans lequel la collection d'abonnements (606) et la collection d'abonnés (610) sont sur un serveur de passerelle d'application.

10. Procédé selon la revendication 8, dans lequel la collection d'abonnés (610) contient une pluralité de paires (dispositif, application).

11. Procédé selon la revendication 8, dans lequel l'étape de détermination comprend l'étape de comparaison du contenu de filtre et de la destination avec des informations de message d'abonnement dans la collection d'abonnements (606).

12. Procédé selon la revendication 8, comprenant en outre les étapes consistant à :
recevoir une notification ayant un contenu de filtre et un ID interne d'abonnement de la source d'événement ;
comparer le contenu de filtre et l'ID interne d'abonnement avec des informations d'abonné dans la collection d'abonnés (610) ; et
envoyer la notification à des abonnés qui ont le contenu de filtre et l'ID Interne d'abonnement.

13. Procédé selon la revendication 8, dans lequel le procédé est exécuté dans un système ayant :
un registre d'applications ;
un référentiel d'applications (516) ; et
le serveur de passerelle d'application (118) comprenant un mandataire (524) pour communiquer avec chacun de la pluralité de dispositifs sans fil (102), et le serveur dorsal (108) hébergeant la source d'événement (520) fournissant des notifications.

14. Support lisible par ordinateur stockant des instructions ou des énoncés pour l'utilisation dans l'exécution dans un ordinateur d'un procédé de fourniture d'un abonnement de groupe, le procédé comprenant les étapes consistant à :
créer une collection d'abonnements (606) pour stocker l'abonnement de groupe d'une pluralité de dispositifs sans fil (102) pour des applications basées sur une notification fournies par un serveur dorsal (108), le serveur dorsal hébergeant une source d'événement (520) et acceptant un abonnement (612) envoyé depuis un serveur de passerelle d'application (118), la collection d'abonnements (606) comprenant une pluralité de filtres décrivant une pluralité d'abonnements de la pluralité de dispositifs sans fil, chacun de la pluralité de filtres représentant une expression de filtre unique ;
créer une collection d'abonnés (610) pour identifier chacun de la pluralité de dispositifs sans fil (102) et des applications de chacun de la pluralité de dispositifs sans fil (102), les applications étant abonnées à la source d'événement acceptant l'abonnement de groupe ;
recevoir une première demande d'abonnement ayant un contenu de filtre et une destination ;
déterminer si un message d'abonnement ayant le contenu de filtre et la destination a été reçu précédemment ;
ajouter un nouveau filtre à la collection d'abonnements (606) si le message d'abonnement n'a pas été reçu précédemment ; et
envoyer un message d'abonnement à la source d'événement comme un abonnement mandataire au nom de la pluralité de dispositifs sans fil ;
dans lequel la collection d'abonnements (606) comprend : un ID Interne d'abonnement ; un ID Externe d'abonnement ; un nom d'abonnement ; une expression de filtre ; et un point d'extrémité de source d'événement ;
dans lequel un nouvel abonné est conservé dans la collection d'abonnés lorsqu'un nouvel abonnement a un filtre identique et une source d'événement identique ; et
dans lequel la collection d'abonnés (610) comprend : un ID Interne d'abonnement ; un dispositif abonné ; une application abonnée ; et un nom d'abonnement.
